# EUROPÄISCHE PATENTSCHRIFT

(11) **EP 3 707 216 B1**
(45) Veröffentlichungstag und Bekanntmachung des Hinweises auf die Patenterteilung: **26.04.2023**
(21) Anmeldenummer: 18795959.8
(22) Anmeldetag: 22.10.2018
(51) Int. Cl.: C09J 5/00, C09J 9/00, C08L 75/14, C09D 5/00, C09D 175/14

(54) **VERFAHREN ZUR ERZEUGUNG OPAKER BESCHICHTUNGEN, VERKLEBUNGEN UND VERGÜSSE SOWIE HÄRTBARE MASSE ZUR VERWENDUNG IN DEM VERFAHREN**
METHOD FOR PRODUCING OPAQUE COATINGS, ADHESIVE BONDS AND CASTINGS, AND A CURABLE COMPOUND FOR USE IN THE METHOD
PROCÉDÉ POUR LA PRODUCTION DE REVÊTEMENTS, COLLAGES ET ENROBAGES OPAQUES AINSI QUE COMPOSITION DURCISSABLE POUR L'UTILISATION DANS LE PROCÉDÉ

(30) Priorität: 09.11.2017 DE 102017126215
(43) Veröffentlichungstag der Anmeldung: 16.09.2020
(60) Teilanmeldung: 23159356.7
(73) Patentinhaber: DELO Industrie Klebstoffe GmbH & Co. KGaA, 86949 Windach (DE)
(72) Erfinder: UHL, Gerald, 86949 Windach (DE); KIENZLE, Philipp, 86949 Windach (DE); KREUL, Kilian, 86949 Windach (DE); BRIEM, Marko, 86949 Windach (DE)
(74) Vertreter: Prinz & Partner mbB
(86) Internationale Anmeldenummer: PCT/EP2018/078817
(87) Internationale Veröffentlichungsnummer: WO 2019/091764

(56) Entgegenhaltungen:
- JP-A- 2010 144 043
- US-A1- 2016 381 821

## Beschreibung

### GEBIET DER ERFINDUNG

Die Erfindung betrifft ein Verfahren zum Erzeugen eines opaken Vergusses, einer Verklebung oder Beschichtung unter Verwendung einer härtbaren Masse, die mindestens eine thermochrome Komponente enthält.

### TECHNISCHER HINTERGRUND

Im Stand der Technik wird die Verwendung thermochromer Farbstoffe beispielsweise im Bereich von Dentalmassen, Sicherheitsetiketten, Lacken, Tinten aber auch in Klebstoffen beschrieben. Die unterschiedlichen Ansätze zeichnen sich dadurch aus, dass je nach Aufgabenstellung und Anwendung reversible oder irreversible thermochrome Farbstoffe zum Einsatz kommen.

Beispiele für reversible thermochrome Farbstoffe werden in der US 5,919,404 oder der EP 2 873 708 A1 beschrieben. Die US 2009/0278090 A1 und US 8,889,590 offenbaren Verbindungen zur Verwendung als irreversible thermochrome Farbstoffe.

Die DE 10 2006 042 488 A1 offenbart Kleb- und Dichtstoffe, welche mindestens eine thermochrome Komponente enthalten, die oberhalb von 140 °C ihre Farbe irreversibel ändert. Der Farbumschlag soll anzeigen, ob im Rahmen der thermischen Aushärtung die für die härtbare Masse mindestens benötigte Härtungstemperatur erreicht wurde.

Die US 8,410,191 B2 beschreibt eine dentale Abformmasse mit einer reversiblen thermochromen Komponente, die durch einen Farbumschlag das Erreichen einer gewissen Mindesttemperatur im Munde des Patienten anzeigt. Dies erlaubt Zahnärzten ein besseres Abschätzen der benötigten Aushärtezeit für die Dentalmasse.

Beide Druckschriften stellen somit eine zusätzliche Detektionsmöglichkeit mit Bezug auf den Fortschritt der Aushärtung bereit. Eine Verwendung zur gezielten Erzeugung einer opaken Verklebung oder eines opaken Vergusses wird in diesen Druckschriften nicht beschrieben. Ein Bedürfnis nach opaken Massen existiert jedoch vor allem im Bereich des Chipvergusses, der Sensoren- bzw. Kameratechnik und bei optischen Bauelementen.

Die EP 3 202 794 A1 offenbart radikalisch strahlungshärtbare Zusammensetzungen, die einen Leukofarbstoff und einen photolatenten Säurebildner zusammen mit einem tertiären Amin enthalten, und die nach der Bestrahlung einen Farbumschlag zeigen. Die Zusammensetzungen machen sich zu Nutze, dass der enthaltene radikalische Photoinitiator schneller zu einer Polymerisation führt, als die photolatente Säure freigesetzt wird. Dadurch können hohe durchstrahlbare Schichtdicken erreicht werden, bevor der Farbstoff säureinduziert in eine opake Form umschlägt. Die offenbarten Massen eignen sich jedoch nicht für tiefe Vergüsse und lange Bestrahlungszeiten, da durch den Umschlag des Farbstoffes in die opake Form, tiefere Schichten des Vergusses nicht mehr durch Bestrahlung erreicht werden können.

Aus der JP 2010-144043 A ist ein Verfahren zur Herstellung einer opaken Verklebung bekannt, bei dem eine härtbare Masse auf (Meth)Acrylatbasis verwendet wird, die oberhalb einer erhöhten Temperatur durchstrahlbar ist und eine reversible thermochrome Komponente enthält. Das Verfahren umfasst die folgenden Schritte: a) Dosieren der härtbaren Masse auf (Meth)Acrylatbasis auf ein Substrat; b) Bestrahlen der Masse mit UV-Licht, wodurch sich die Masse erwärmt und sich die Masse entfärbt, c) weiteres Belichten der Masse mit UV-Strahlung, um eine weitere Vernetzung zu erzielen; und d) Abkühlen der gehärteten Masse auf eine tiefer liegende Temperatur, wobei die Masse sich wieder schwarz färbt.

Bei der Fertigung von Kameramodulen und optischen Bauelementen werden vielfach dualhärtende Massen eingesetzt, die sowohl durch aktinische Strahlung als auch Wärme gehärtet werden können. In den sogenannten "Active Alignment Prozessen" wird nach dem Dosieren eines Klebstoffes der optische Aufbau des Kameramoduls auf den nicht ausgehärteten Klebstoff platziert und mit Hilfe eines Mikromanipulators relativ zum Bildsensor bewegt. Dies geschieht bei eingeschaltetem Sensor unter Auswertung von optischen Messsignalen. Die Position des optischen Aufbaus oder alternativ die des Sensors wird in verschiedenen Ebenen so lange bewegt, bis eine ausreichend hohe Güte der Ausrichtung erreicht wurde. Die entsprechende Position wird durch Bestrahlung des Klebstoffes mit aktinischer Strahlung fixiert. Diese Fixierung erlaubt den weiteren Transport des Bauteils und einen anschließenden Warmhärtungsschritt, ohne dass es zu einem Verlust der Ausrichtung kommt. Um eine möglichst große fixierte Zone bei der Bestrahlung und damit eine möglichst stabile Ausrichtung zu erhalten ist es entscheidend, dass die Masse eine ausreichende Durchstrahlbarkeit aufweist.

Neben hohen Lichtfixierfestigkeiten fordern die Hersteller von Kameramodulen jedoch gleichzeitig möglichst optisch dichte Aufbauten, um die Anteile an Streulicht gering zu halten, die den Sensor erreichen können. Die Anforderung an eine hohe Durchstrahlbarkeit steht dabei in Gegensatz zu der Forderung nach einer möglichst hohen Blickdichtigkeit. Bisher werden diese Anforderungen von keiner am Markt erhältlichen Masse gleichzeitig erfüllt.

Die US 2008/0118241 A1 und die US 2011/0037886 A1 sehen vor, das Streulicht durch Aufbringen von opaken Beschichtungen oder eine zusätzliche Verkapselung entlang des streulichtempfindlichen optischen Aufbaus eines Kameramoduls zu minimieren. Dies erfordert zwingend einen zusätzlichen Prozessschritt oder komplexere Modulaufbauten. Beim großflächigen Einsatz eines blickdichten Verkapselungsmaterials, das in Kontakt mit unterschiedlichen Materialien des Kameramoduls steht, können unter wechselnden Temperaturbedingungen Spannungen auftreten, die auf die verschiedenen thermischen Ausdehnungskoeffizienten zurückgeführt werden können und die in der Folge die Zuverlässigkeit des Kameramoduls senken.

Auch bei der Fertigung von Chipmodulen für Chipkarten gehört der Verguss der Chips zum Schutz vor Umwelteinflüssen seit langem zum Stand der Technik. Viele Hersteller wünschen sich neben dem reinen mechanischen Schutz aber auch einen zusätzlichen Schutz vor dem Auslesen etwaiger Informationen in Bezug auf das Chipfabrikat oder die verwendete Logik. So können bereits mit Licht des sichtbaren Spektrums bei Wellenlängen von 400 nm bis 700 nm und unter Verwendung von optischen Mikroskopen unter Umständen geheime Schlüssel ausgelesen werden. Eine derartige Analyse des Chips würde sich durch Verwendung von opaken Vergussmassen unterbinden oder erschweren lassen.

### ZUSAMMENFASSUNG DER ERFINDUNG

Der vorliegenden Erfindung liegt die Aufgabe zu Grunde, ein einfaches Verfahren zum Verkleben, Vergießen oder Beschichten von Bauteilen und die dazugehörigen Massen bereitzustellen, die nach der Härtung der Masse dauerhaft opak erscheinen, ohne dass aufwendige Verfahrensmaßnahmen getroffen werden müssen.

Erfindungsgemäß wird diese Aufgabe durch ein Verfahren nach Anspruch 1 und eine härtbare Masse nach Anspruch 11 gelöst.

Weitere Ausführungsformen der Erfindung sind in den Unteransprüchen angegeben, die wahlweise miteinander kombiniert werden können.

Das erfindungsgemäße Verfahren zur Herstellung eines opaken Vergusses, einer Verklebung oder Beschichtung wird unter Verwendung einer härtbaren Masse durchgeführt, die bei einer ersten Temperatur durchstrahlbar ist, wobei die Masse einen UV-VIS-Transmissionsgrad in einem Spektralbereich von 380 bis 1100 nm und bei einer Schichtdicke von 200 µm aufweist, der mindestens 75 % beträgt, und die Masse mindestens eine irreversible thermochrome Komponente enthält. Das erfindungsgemäße Verfahren umfasst die folgenden Schritte:
(a) Dosieren der härtbaren Masse auf ein erstes Substrat;
(b) wahlweise das Zuführen eines zweiten Substrates zur härtbaren Masse;
(c) Härten der Masse durch Bestrahlen mit aktinischer Strahlung sowie wahlweise Einwirken von Wärme und/oder Feuchte, um in der Masse eine Polymerisation oder Vernetzung zu initiieren,
(d) Erwärmen der Masse auf mindestens eine zweite Temperatur, wobei die zweite Temperatur höher ist als die erste Temperatur und wobei die Masse bei Erreichen der zweiten Temperatur durch einen Farbumschlag der thermochromen Komponente in einen opaken Zustand übergeht übergeht, in welchem der UV-VIS-Transmissionsgrad der Masse bei 450 nm und einer Schichtdicke von 200 µm um mindestens 25 % geringer ist als vor dem Belichten der Masse.

Die zur Durchführung des erfindungsgemäßen Verfahrens verwendete härtbare Masse umfasst ein härtbares Harz sowie mindestens eine thermochrome Komponente und bevorzugt einen wärmelatenten Säurebildner. Die thermochrome Komponente ist eine irreversible thermochrome Komponente. Dies bedeutet, dass der einmal eingetretene Farbumschlag bei einer Änderung der Umgebungstemperatur erhalten bleibt und nicht rückgängig gemacht werden kann.

Das härtbare Harz ist mit Bezug auf seine chemische Basis nicht weiter eingeschränkt. Erfindungsgemäß können härtbare Harze eingesetzt werden, die durch radikalische oder kationische Polymerisation, oder durch eine Polyadditions- oder Polykondensationsreaktion vernetzen. Es ist ebenfalls die Verwendung härtbarer Massen möglich, die verschiedene härtbare Harze enthalten und unterschiedliche Polymerisationsreaktionen kombinieren, wie beispielsweise Massen, die sowohl radikalisch polymerisierbare Harze als auch Verbindungen enthalten, die durch Polyaddition oder Polykondensation vernetzen.

Bevorzugt ist die härtbare Masse eine einkomponentige härtbare Masse. Derartige einkomponentige Massen lassen sich besonders einfach dosieren und verarbeiten.

Das erfindungsgemäße Verfahren zeichnet sich somit durch eine hohe Flexibilität aus und kann an unterschiedliche Anwendungen mit unterschiedlichen Anforderungen an die jeweilige ausgehärtete Masse angepasst werden.

Zur Erzeugung einer blickdichten, opaken Beschichtung oder Verklebung ist lediglich ein Prozessschritt erforderlich, bei dem unter Wärmeeintrag die thermochrome Komponente aktiviert und der Farbumschlag der thermochromen Komponente erreicht wird. Im Falle einer zusätzlichen Warmhärtung der Masse können die Schritte des Eintragens von Wärme für den Farbumschlag und der thermischen Aushärtung gleichzeitig durchgeführt werden.

Bevorzugt enthält die härtbare Masse zusätzlich einen wärmelatenten Säurebildner. Es hat sich gezeigt, dass die Anwesenheit einer aus dem wärmelatenten Säurebildner durch Erwärmen freigesetzten Säure den Farbumschlag der thermochromen Komponente begünstigt.

Die Erfindung gestattet insbesondere eine Verwendung von einkomponentigen, dual härtbaren Massen, die in einer ersten Stufe durch Bestrahlen mit aktinischer Strahlung fixiert oder vorgehärtet werden, während in einer anschließenden zweiten Stufe die endgültige Aushärtung durch Einwirkung von Feuchte oder Wärme erfolgt. Da die thermochrome Komponente durch das Belichten nicht aktiviert wird, können die Massen ohne Änderung der üblichen Prozesse verarbeitet werden. Zur Auslösung des Farbumschlags der thermochromen Komponente ist dann lediglich ein Wärmeeintrag erforderlich, beispielsweise durch eine Wärmhärtung in der zweiten Stufe oder durch einen zusätzlichen Temperschritt.

Im Sinne der Erfindung bedeutet "durchstrahlbar", dass die Masse einen UV-VIS-Transmissionsgrad in einem Spektralbereich von 380 bis 1100 nm und einer Schichtdicke von 200 µm aufweist, der mindestens 75 % beträgt.

"Opaker Zustand" bedeutet, dass der UV-VIS-Transmissionsgrad der Masse bei 450 nm und einer Schichtdicke von 200 µm nach der Durchführung des erfindungsgemäßen Verfahrens um mindestens 25 % geringer ist als vor der Bestrahlung.

"Einkomponentig" bedeutet, dass alle Komponenten der härtbaren Masse zusammen in einer Mischung vorliegen.

"Wärmelatenter Säurebildner" bedeutet, dass der Säurebildner bei Raumtemperatur stabil ist und erst bei Erwärmen und Erreichen einer vorbestimmten höheren Temperatur eine Säure, vorzugsweise eine Brönstedt-Säure, freisetzt.

Die erste Temperatur, bei der die härtbare Masse appliziert und bestrahlt wird, liegt bevorzugt in einem Bereich von 10 °C bis 40 °C, besonders bevorzugt bei der Umgebungstemperatur von etwa 20 °C bis 30 °C.

Die zweite Temperatur, bei der die thermochrome Komponente aktiviert und der Farbumschlag ausgelöst wird, liegt bevorzugt mindestens 20 °C über der ersten Temperatur, weiter bevorzugt mindestens 30 °C und besonders bevorzugt mindestens 40 °C über der ersten Temperatur. Ein hinreichender Abstand zwischen der ersten und zweiten Temperatur erlaubt eine sichere Steuerung des Verfahrens und gewährleistet, dass die härtbare Masse während einer strahlungsinduzierten Härtung über die gesamte Schichtdicke durchstrahlbar bleibt.

Bevorzugt liegt die zweite Temperatur in einem Bereich von 60 bis 120 °C. Soweit die härtbare Masse einen wärmelatenten Säurebildner enthält, liegt die Aktivierungstemperatur des wärmelatenten Säurebildners, bei der die Säure freigesetzt wird, bevorzugt in einem Bereich von 60 bis 160 °C. Besonders bevorzugt ist die Aktivierungstemperatur des wärmelatenten Säurebildners gleich oder kleiner als die zweite Temperatur.

Der Eintrag von Wärme zur Aktivierung der thermochromen Komponente sowie wahlweise der Warmhärtung der Masse erfolgt bevorzugt in einem separaten Schritt, bei dem das Substrat mit der bestrahlten Masse in einen Ofen eingebracht oder mittels einer externen Heizquelle erwärmt wird. Die Schritte c) und d) des erfindungsgemäßen Verfahrens können aber auch gleichzeitig durchgeführt werden. Unter Umständen kann sogar die Exothermie der strahlungsinduzierten Polymerisationsreaktion zur Aktivierung der thermochromen Komponente ausreichen, so dass kein separates Erwärmen erfolgen oder ein Temperschritt durchgeführt werden muss.

### BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn zu verstehen sind.

In einer ersten bevorzugten Ausführungsform des erfindungsgemäßen Verfahrens werden dualhärtende Massen verwendet, die sowohl durch Bestrahlen mit aktinischer Strahlung als auch wärmeinduziert gehärtet werden können, und die eine irreversible thermochrome Verbindung enthalten. Diese Massen enthalten einen wärmelatenten Säurebildner sowie zusätzlich einen photolatenten Säurebildner oder einen radikalischen Photoinitiator zusammen mit einem thermisch aktivierbaren Radikalbildner.

Das Verfahren zum Erzeugen einer opaken Verklebung, eines Vergusses oder einer Beschichtung unter Verwendung einer durch Licht und Wärme dualhärtbaren Masse nach der ersten Ausführungsform der Erfindung umfasst bevorzugt die folgenden Schritte:
a) Dosieren der härtbaren Masse auf ein erstes Substrat;
b) Wahlweise Zuführen eines zweiten Substrats zu der Masse;
c) Belichten der Masse mit aktinischer Strahlung einer geeigneten Wellenlänge bei der ersten Temperatur, um den photolatenten Säurebildner oder den radikalischen Photoinitiator zu aktivieren und eine erste Polymerisationsreaktion zu initiieren;
d) Erwärmen der belichteten Masse auf mindestens die zweite Temperatur, die ausreichend ist, um den Farbumschlag der irreversiblen thermochromen Komponente hervorzurufen, und Aushärten der Masse.

Im Verfahren der ersten Ausführungsform erfolgt der erste Härtungsschritt c) strahlungsinduziert und der zweite Härtungsschritt d) thermisch. Während der strahlungsinduzierten Härtung in Schritt c) bleibt die Masse durchstrahlbar. Der thermische Härtungsschritt d) kann stufenweise durchgeführt werden. Beispielsweise kann das Aushärten der belichteten Masse in einem Temperschritt oberhalb der zweiten Temperatur erfolgen, nachdem die thermochrome Komponente aktiviert wurde, oder der Temperschritt kann zur vollständigen Aushärtung der Masse durchgeführt werden, nachdem die Masse auf mindestens die zweite Temperatur erwärmt und ein Farbumschlag der thermochromen Komponente herbeigeführt wurde.

Bevorzugt werden das thermische Aushärten der belichteten Masse und die Aktivierung der thermochromen Komponenten jedoch in einem einzigen Schritt durchgeführt. Dies bedeutet, dass schon beim Erwärmen der belichteten Masse in Schritt d) mindestens die zweite Temperatur erreicht und der wärmelatente Säurebildner sowie wahlweise der thermische Radikalbildner aktiviert wird, so dass die Masse aushärtet und durch den Farbumschlag der thermochromen Komponente in einen opaken Zustand übergeht.

Gemäß einer weiteren Variante der ersten Ausführungsform des erfindungsgemäßen Verfahrens können auch die Schritte c) und d) gemeinsam in einer Stufe durchgeführt werden. Die Masse kann also schon während der Belichtung erwärmt werden, wobei das Erwärmen durch separaten Wärmeeintrag von außen oder durch Ausnutzen der Reaktionswärme der strahlungsinduzierten Polymerisation erfolgen kann.

Die Durchführung des erfindungsgemäßen Verfahrens gemäß der ersten Ausführungsform erfolgt bevorzugt mit dualhärtenden, kationisch polymerisierbaren Massen, die zur strahlungsinduzierten Härtung einen photolatenten Säurebildner enthalten und die nach der Bestrahlung zur vollständigen Aushärtung einer Wärmebehandlung unterzogen werden. Der in diesen Massen zusätzlich enthaltene wärmelatente Säurebildner kann sowohl zur thermisch induzierten Aushärtung der belichteten Massen als auch zur Aktivierung des Farbumschlags der thermochromen Komponente dienen.

Im Falle von Massen mit kationisch polymerisierbaren Harzen, die bereits während der Bestrahlung in Schritt c) eine ausreichende Exothermie entwickeln, um die zweite Temperatur zu erreichen und den Farbumschlag der thermochromen Komponente hervorzurufen, muss kein separater Wärmeeintrag von außen erfolgen. Das Ausmaß der durch die strahlungsinduzierte Polymerisation in Schritt c) freigesetzten verfügbaren Wärme für die Warmhärtung und/oder den Farbumschlag ist außer von der Zusammensetzung der Masse auch stark vom dosierten Volumen, den für die Substrate verwendeten Materialien und der Bestrahlungsdosis abhängig. Da die kationische Polymerisation selbsterhaltend abläuft, härtet die Masse auch ohne zusätzlichen Temperschritt durch.

Bevorzugt werden jedoch die Belichtung mit aktinischer Strahlung gemäß Schritt c) und die thermisch induzierte Härtung und Aktivierung der thermochromen Komponente gemäß Schritt d) in zwei separaten Stufen durchgeführt. Bei tiefen Vergüssen mit hoher Schichtdicke kann es zudem sinnvoll sein, an die Bestrahlung und das Erwärmen einen zusätzlichen Temperschritt e) oberhalb der zweiten Temperatur anzuschließen, um einen vollständigen Farbumschlag der thermochromen Komponente im gesamten Vergussvolumen sicher zu stellen.

Außer mit kationisch polymerisierbaren Massen kann das Verfahren nach der ersten bevorzugten Ausführungsform auch mit dualhärtenden Massen auf Basis von radikalisch härtenden (Meth)Acrylatharzen durchgeführt werden. Für die Stufe der strahlungsinduzierten radikalischen Polymerisation gemäß Schritt c) kann ein radikalischer Photoinitiator verwendet werden. Eine Warmhärtung gemäß Schritt d) durch radikalische Polymerisation ist beispielsweise durch Zusatz eines Peroxids als radikalischer Härter möglich. Zusätzlich enthalten auch die radikalisch dualhärtenden Massen den wärmelatenten Säurebildner.

Überraschenderweise hat sich gezeigt, dass strahlungsinduziert härtbare Massen, die keinen zusätzlichen wärmelatenten Säurebildner enthalten, auch keinen Farbumschlag der thermochromen Komponente zeigen. Selbst bei Temperaturen weit oberhalb der Umschlagstemperatur der thermochromen Komponente erfolgt in Abwesenheit einer zusätzlichen, durch den wärmelatenten Säurebildner freigesetzten Säure kein persistenter Farbumschlag in der Masse. Somit benötigen zur Durchführung des erfindungsgemäßen Verfahrens selbst solche Massen einen zusätzlichen wärmelatenten Säurebildner, die wärmeinduziert durch eine radikalische Polymerisation oder Polyaddition aushärten.

Gemäß einer zweiten Ausführungsform des erfindungsgemäßen Verfahrens können dualhärtende Massen verwendet werden, die ohne Erwärmung vollständig aushärten. So können beispielweise Massen verwendet werden, die durch Einwirkung von Licht und Feuchte härten. Diese Massen können beispielsweise einen radikalischen Photoinitiator sowie ein härtbares Harz mit strahlungshärtenden Gruppen, bevorzugt auf Basis von (Meth)acrylatgruppen, sowie einer silanhaltigen Komponente enthalten. Ferner enthalten diese Massen eine irreversible thermochrome Komponente und einen wärmelatenten Säurebildner. Vor oder nach der Feuchtehärtung werden die zuvor belichteten Massen mindestens auf die für den vollständigen Farbumschlag der thermochromen Komponente ausreichende zweite Temperatur erwärmt.

Ein Verfahren zur Herstellung einer opaken Verklebung, eines Vergusses oder einer Beschichtung unter Verwendung einer durch Licht und Feuchte härtbaren Masse nach der zweiten Ausführungsform der Erfindung umfasst bevorzugt folgende Schritte:
a) Dosieren der härtbaren Masse auf ein erstes Substrat;
b) Wahlweise Zuführen eines zweiten Substrates zur härtbaren Masse;
c) Belichten der Masse mit aktinischer Strahlung einer geeigneten Wellenlänge bei der ersten Temperatur, um eine erste Polymerisationsreaktion zu initiieren;
d) Erwärmen der belichteten und wahlweise ausgehärteten Masse auf mindestens die zweite Temperatur, die ausreichend ist, um den wärmelatenten Säurebildner zu aktivieren und einen Farbumschlag der irreversiblen thermochromen Komponente hervorzurufen; und
e) Einhalten einer ausreichenden Wartezeit bis zur vollständigen Feuchtehärtung der Masse vor oder nach Schritt d).

Die Wartezeit bis zur vollständigen Feuchtehärtung in Schritt e) der Masse kann durch ein Befeuchten der Substrate oder einen gezielten Feuchteeintrag in die Masse vor deren Applikation oder Aushärtung verkürzt werden.

In dem Verfahren gemäß der zweiten Ausführungsform ist es nicht zwangsläufig nötig, vor dem Erwärmen in Schritt d) eine Wartezeit bis zur vollständigen Feuchtehärtung einzuhalten. Bevorzugt wird das Erwärmen des Substrats in Schritt d) unmittelbar nach dem Bestrahlen mit aktinischer Strahlung in Schritt c) durchgeführt. Der vollständige Aufbau eines durch Feuchtigkeit gehärteten Netzwerkes in der Masse kann anschließend durch Lagern unter Umgebungsbedingungen oder kontrollierten Feuchtebedingungen und Einhalten einer ausreichenden Wartezeit erfolgen.

Gemäß einer dritten bevorzugten Ausführungsform des erfindungsgemäßen Verfahrens werden härtbare Massen verwendet, die nicht dualhärtend sind, sondern nur strahlungsinduziert gehärtet werden können, und die eine irreversible thermochrome Komponente enthalten. Auch in diesem Fall sind die Anwesenheit eines wärmelatenten Säurebildners und ein ausreichender Wärmeeintrag in die gehärtete Masse erforderlich, um den wärmelatenten Säurebildner zu aktivieren und einen Farbumschlag der thermochromen Komponente zu erzielen. Der Wärmeeintrag kann beispielsweise durch einen nachgeschalteten Ofenprozess erfolgen.

Das Verfahren zur Herstellung einer opaken Verklebung, Vergusses oder Beschichtung unter Verwendung einer ausschließlich durch Licht härtbaren Masse nach der dritten Ausführungsform der Erfindung umfasst folgende Schritte:
a) Dosieren der härtbaren Masse auf ein erstes Substrat;
b) Wahlweise Zuführen eines zweiten Substrates zur härtbaren Masse;
c) Belichten der Masse mit aktinischer Strahlung einer geeigneten Wellenlänge bei der ersten Temperatur, um die Masse zu härten; und
d) Erwärmen der gehärteten Masse auf mindestens die zweite Temperatur, die ausreichend ist, um den wärmelatenten Säurebildner zu aktivieren und einen Farbumschlag der irreversiblen thermochromen Komponente hervorzurufen

Das Verfahren gemäß der dritten Ausführungsform kann beispielsweise unter Verwendung von strahlungshärtbaren Massen auf Basis von (meth)acrylathaltigen Harzen durchgeführt werden. Als Härter enthalten die Massen bevorzugt einen radikalischen Photoinitiator und wahlweise einen Sensibilisator.

Die bisher beschriebenen Ausführungsformen umfassen jeweils härtbare Massen, die eine irreversible thermochrome Komponente und einen wärmelatenten Säurebildner enthalten.

In der Fertigungspraxis kann es ferner sinnvoll sein, die in den obigen Ausführungsformen beschriebenen Schritte nicht unmittelbar nacheinander auszuführen, sondern einzelne Schritte, wie beispielsweise den Belichtungsschritt, iterativ für mehrere Bauteile oder Bauteilgruppen durchzuführen, bevor die Warmhärtung oder wahlweise ein Temperschritt für eine Vielzahl von produzierten Teilen auf einmal durchgeführt wird. Diese Prozessführung kann vor allem in Batchverfahren verwendet werden und erlaubt höhere Prozessgeschwindigkeiten als in rein konsekutiven, kontinuierlichen Prozessen. Daher sind von den oben beschriebenen Ausführungsformen des erfindungsgemäßen Verfahrens auch prozessbedingte Zwischenschritte umfasst, solange abschließend ein Farbumschlag der thermochromen Komponente sichergestellt ist und die ausgehärtete Masse in einem opaken Zustand vorliegt.

Im Folgenden werden die härtbaren Massen zur Durchführung der bevorzugten Ausführungsformen des erfindungsgemäßen Verfahrens näher beschrieben. Die härtbaren Massen für das erfindungsgemäße Verfahren sind mit Bezug auf ihre chemische Basis nicht weiter eingeschränkt, solange die Massen eine thermochrome Komponente (A) und eine wärmelatente Säure (B) enthalten.

### Komponente (A): thermochrome Komponente

Die thermochrome Komponente umfasst die im oben beschriebenen Stand der Technik bekannten Verbindungsklassen. Die im Folgenden genannten Beispiele sind dabei in keiner Form als erschöpfend oder einschränkend zu verstehen. Für das erfindungsgemäße Verfahren sind im Wesentlichen alle thermochromen Komponenten geeignet, die mit den härtbaren Massen kompatibel sind, deren Verarbeitung und Lagerstabilität nicht einschränken oder die Eigenschaften der gehärteten Massen negativ beeinflussen.

Beispiele für in der thermochromen Komponente verwendete Verbindungen sind Farbstoffe aus den Verbindungklassen der Spiropyrane, Triphenylmethane, Benzoxazine, Diazarhodaminlactone und Fluorane sowie Kombinationen davon.

Beispiele für kommerziell erhältliche irreversible thermochrome Komponenten umfassen Produkte, die unter den Handelsnamen TM-ISI 90-3541, TM-ISI 75-3515, Kromagen Black K60-NH, S-205, Black 305, Black 400 von den Firmen NCC, Hallcrest und Nagase erhältlich sind.

Die genannten thermochromen Komponenten werden entweder als organischer Farbstoff mit üblichen Zuschlagstoffen oder in verkapselter Form, oder in Form von Pigmenten erhalten und in den härtbaren Massen eingesetzt.

Die thermochrome Komponente (A) kann direkt in die Zusammensetzung der härtbaren Masse eingebracht oder eingelöst werden, oder als Masterbatch in Form einer Vorlösung oder Vormischung in geeigneten Harzkomponenten bereitgestellt werden.

Der Anteil der thermochromen Komponente (A) in der härtbaren Masse beträgt bevorzugt mindestens 0,05 Gew.-%, bevorzugt mindestens 0,1 Gew.-%, und höchstens 5 Gew.-%, bevorzugt höchstens 4 Gew.-%, und besonders bevorzugt höchstens 3 Gew.-%, bezogen auf das Gesamtgewicht der härtbaren Masse.

Die thermochrome Komponente (A) ist eine irreversible thermochrome Komponente. Der Farbumschlagspunkt der thermochromen Komponente liegt bevorzugt in einem Bereich von 60 bis 120 °C.

### Komponente (B): Wärmelatenter Säurebildner:

In allen Ausführungsformen, bei denen eine irreversible thermochrome Komponente in der härtbaren Masse verwendet wird, ist die Zugabe eines wärmelatenten Säurebildners (B) bevorzugt, um einen Farbumschlag der thermochromen Komponente sicherzustellen. In kationisch härtbaren Massen, die beispielsweise in der ersten bevorzugten Ausführungsform verwendet werden, erfüllt der wärmelatente Säurebildner eine Doppelfunktion, da die beim Erwärmen des Säurebildners freigesetzte Säure sowohl zur Aktivierung des Farbumschlags der thermochromen Komponente als auch die wärmeinduzierte Härtung der Massen verwendet wird.

Eine Verwendung von nicht wärmelatenten Säuren wie beispielsweise Mineralsäuren oder organischen Sulfonsäuren ist nicht bevorzugt, da diese keine Formulierung von lagerstabilen einkomponentigen Massen erlauben.

Geeignete wärmelatente Säurebildner auf Basis von quartären Benzylammoniumsalzen sind in der EP 0 343 690 A2 oder der WO 2005/097883 A1 beschrieben. Kommerziell verfügbare Produkte sind unter den Bezeichnungen K PURE CXC-1612 oder K-PURE CXC-1733 von King Industries erhältlich.

Ferner können auch aromatische Sulfonium- oder lodoniumsalze als thermisch aktivierbare, wärmelatente Säurebildner eingesetzt werden. Entsprechende Produkte sind unter den Bezeichnungen SAN-AID SI-80L und SAN-AID SI-100L von SAN-SHIN Chemical Industry Co., Ltd, erhältlich. Darüber hinaus können verschiedene Metallchelatkomplexe auf Basis von Titan oder Aluminium als wärmelatente Säurebildner zum Einsatz kommen.

Wärmelatente Säuren auf Basis von Aryliodonium- oder Arylsulfoniumsalzen, in denen Aluminatanionen als Gegenionen dienen, sind beispielsweise aus der WO 2017/03552 A1 bekannt.

Der wärmelatente Säurebildner (B) liegt in der härtbaren Masse bevorzugt in einem Anteil von 0,01 bis 5 Gew.-% vor, weiter bevorzugt in einem Anteil von 0,05 - 3 Gew.-%, besonders bevorzugt in einem Anteil von 0,1 bis 1,5 Gew.-%, jeweils bezogen auf das Gesamtgewicht der härtbaren Masse.

Die Aktivierungstemperatur des wärmelatenten Säurebildners, bei der die Säure freigesetzt wird, liegt bevorzugt in einem Bereich von 60 bis 160 °C. Bevorzugt weist der wärmelatente Säurebildner eine Aktivierungstemperatur auf, die bei oder unterhalb des Farbumschlagpunktes der thermochromen Komponente liegt. Je nach Prozessführung können aber auch wärmelatente Säurebildner eingesetzt werden, deren Aktivierungstemperatur oberhalb des Farbumschlagspunktes der thermochromen Komponente liegt.

### Komponente (C): Härtbare Harze

Als Basis für die in dem erfindungsgemäßen Verfahren verwendeten härtbaren Harze können epoxidhaltige, (meth)acrylathaltige oder silanhaltige Harze und Verbindungen zum Einsatz kommen. Geeignete Mischungen unterschiedlicher Harzkomponenten sind ebenfalls im Sinne der Erfindung. Im Folgenden werden die für die härtbaren Massen geeigneten Harzkomponenten näher erläutert.

Die Komponente (C) liegt in der erfindungsgemäßen härtbaren Masse bevorzugt in einem Anteil von 1-99 Gew.-%, weiter bevorzugt 10-70 Gew.-% und besonders bevorzugt von 20-50 Gew.-% vor, jeweils bezogen auf das Gesamtgewicht der Masse.

### Komponente (C1): epoxidhaltige Harzkomponenten

Die epoxidhaltige Komponente (C1) in den erfindungsgemäßen Massen umfasst mindestens eine mindestens difunktionelle epoxidhaltige Verbindung. Mindestens "difunktionell" bedeutet, dass die epoxidhaltige Verbindung mindestens zwei Epoxidgruppen enthält. Die Komponente (C1) kann beispielsweise cycloaliphatische Epoxide, aromatische und aliphatische Glycidylether, Glycidylester oder Glycidylamine und Mischungen davon umfassen.

Difunktionelle cycloaliphatische Epoxidharze sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexendioxid, Bis(3,4-Epoxycyclohexylmethyl)adipat, Dicyclopentadiendioxid, 1,2-Epoxy-6-(2,3-epoxypropoxy)hexahydro-4,7-methanindan.

Aromatische Epoxidharze können in den erfindungsgemäßen Massen ebenso verwendet werden. Beispiele für aromatische Epoxidharze sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan, Glycidylether von Tris(hydroxyphenyl)-ethan. Ferner können auch alle vollständig oder teilweise hydrierten Analoga aromatischer Epoxidharze eingesetzt werden.

Auch mit epoxidhaltigen Gruppen substituierte Isocyanurate und andere heterocyclische Verbindungen können in den erfindungsgemäßen Massen verwendet werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidharze in den erfindungsgemäßen Massen eingesetzt werden.

Ebenfalls im Sinne der Erfindung ist eine Kombination mehrerer epoxidhaltiger Verbindungen, von denen mindestens eine di- oder höherfunktionell ist.

Zusätzlich zu den mindestens difunktionellen epoxidhaltigen Komponenten können auch monofunktionelle Epoxide als reaktive Verdünner verwendet werden.

Beispiele für kommerziell erhältliche epoxidhaltige Komponenten (C1) sind Produkte, die unter den Handelsnamen CELLOXIDE^{™} 2021P, CELLOXIDE^{™} 8000 von Daicel Corporation, Japan, als EPIKOTE^{™} RESIN 828 LVEL, EPIKOTE^{™} RESIN 166, EPIKOTE^{™} RESIN 169 von Momentive Specialty Chemicals B.V., Niederlande, als Epilox^{™}-Harze der Produktreihen A, T und AF von Leuna Harze, Deutschland, oder als EPICLON^{™} 840, 840-S, 850, 850-S, EXA850CRP, 850-LC von DIC K.K., Japan, verfügbar sind.

Epoxidhaltige Harze werden bevorzugt für diejenigen Ausführungsformen des erfindungsgemäßen Verfahrens verwendet, in denen kationisch härtende Harze zum Einsatz kommen. Anstelle von oder zusätzlich zu Epoxiden können für die erste Ausführungsform des erfindungsgemäßen Verfahrens auch kationisch polymerisierbare Harze eingesetzt werden, die Oxetan- und/oder Vinylethergruppen enthalten. Gemische verschiedener kationisch polymerisierbarer Harze sind ebenfalls im Sinne der Erfindung.

### Komponente (C2): (meth)acrylathaltige Harze

Die (meth)acrylathaltige Komponente (C2) in der härtbaren Masse umfasst wenigstens ein (Meth)Acrylat und ist hinsichtlich ihrer chemischen Grundstruktur (z.B. aromatisch, aliphatisch, cycloaliphatisch) nicht weiter eingeschränkt. Die als härtbare Harze verwendeten (Meth)Acrylate können mono-, di-, tri oder höher funktionell sein. Bevorzugt umfasst die Komponente (C2) wenigstens ein difunktionelles (Meth)Acrylat. Besonders bevorzugt wird die meth)acrylathaltige Komponente (C2) in den härtbaren Massen der Erfindung zusammen mit einem radikalischen Photoinitiator als strahlungshärtende Komponente verwendet. Auch eine Warmhärtung unter Verwendung eines thermisch aktivierbaren Radikalbildners ist möglich.

Die Bezeichnung "(Meth)Acrylat" sowie sinngleiche Bezeichnungen stehen hier und im Folgenden sowohl für Derivate der Acrylsäure als auch der Methacrylsäure, und Mischungen davon.

Beispiele für geeignete monofunktionelle (Meth)Acrylate sind Isobornylacrylat, 2-Hydroxyethylacrylat, 4-Hydroxybutylacrylat, Stearylacrylat, Tetrahydrofurfurylacrylat, 2-Hydroxy-3-phenoxypropylacrylat, 2-Hydroxypropylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid und andere N-N-Dialkylacrylamide, N-Alkylacrylamide, N-Alkoxyalkylacrylamide sowie anderweitig subsituierte Acrylamide genannt. Auch die analogen Methacrylate können in den erfindungsgemäßen Massen eingesetzt werden.

Beispiele für difunktionelle Acrylate sind 1,4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat und andere Glycoldiacrylate, Polybutadiendiacrylat, Cyclohexandimethanoldiacrylat, Diurethanacrylate von monomeren, oligomeren oder polymeren Diolen und Polyolen.

Beispiele für eine mindestens trifunktionelle (Meth)Acrylatkomponente umfassen Trimethylolpropantriacrylat (TMPTA), Dipentaerythritolpentaacrylat (DIPEPA) und Dipentaerythritolhexaacrylat (DPHA) sowie Mischungen davon. Diese sind kommerziell von Sartomer unter den Markenbezeichnungen SR351, SR399 und DPHA erhältlich.

Neben den vorgenannten (Meth)Acrylsäureestern können auch Urethan(meth)acrylate mehrwertiger Alkohole, (Meth)Acrylamide mehrwertiger Amine, Epoxy(meth)acrylate oder Hybridmoleküle, die zusätzlich eine Epoxyfunktionalität oder Härterfunktionalität aufweisen, eingesetzt werden.

### Komponente (C3): Silanhaltige Komponenten

Zur Herstellung von durch Einwirkung von Feuchte härtbare Massen können Alkoxysilanverbindungen zum Einsatz kommen. Besonders bevorzugt werden α- oder γ-Alkoxysilane verwendet, die mono- oder höherfunktionell sein können.

Beispiele für kommerziell verfügbare monofunktionelle α-Alkoxysilane sind Produkte der Firma Wacker Chemie AG. Methacrylat- oder carbamatfunktionalisierte α-Alkoxysilane sind unter den Bezeichnungen GENIOSIL XL 32, XL 33, XL 63 oder XL 65 im Handel erhältlich.

Difunktionelle α-Silane auf Basis von Polyethern oder Polyurethanen sind ebenfalls von der Firma Wacker Chemie AG erhältlich. Diese werden unter der Marke GENIOSIL STP-E angeboten. Beispielhaft seien die Typen STP-E10 und STP-E30 angeführt.

Als Beispiele für γ-Silane können silanterminierte Polyurethane oder silanterminierte Polyether genannt werden. Diese sind kommerziell von der Firma Wacker Chemie AG unter den Bezeichnungen STP-E15 und STP-E35 erhältlich.

### Komponente (D): Härter

Der für die Aushärtung der härtbaren Harze im erfindungsgemäßen Verfahren verwendete Härter muss so gewählt sein, dass er zur Harzkomponente komplementäre funktionelle Gruppen enthält oder anderweitig reaktive Spezies erzeugt, die eine Härtung der härtbaren Harze durch Polymerisation oder Vernetzung herbeiführen. Der Härter kann Verbindungen umfassen, die über eine Polyadditions- oder Polykondensationsreaktion mit dem härtbaren Harz reagieren und vernetzen, aber auch Verbindungen, die durch Belichten oder Erwärmen reaktive kationische, basische oder radikalische Spezies freisetzen und dadurch eine Polymerisation der härtbaren Harze initiieren.

### Komponente (D1): epoxidreaktive Härterkomponenten

Die Auswahl der epoxidreaktiven Komponente ist nicht weiter eingeschränkt. Es können verschiedene im Stand der Technik bekannte Verbindungklassen wie Amine, Alkohole, Thiole, Anhydride, Bismaleinimide oder Cyanatester zur Härtung und Vernetzung unter Polyaddition eingesetzt werden. Im Falle einer kationisch initiierten Polymerisationsreaktion können auch photo- oder wärmelatente Säurebildner zur Härtung verwendet werden, wie sie oben als Komponente (B) oder nachfolgend als Komponente (D2) beschrieben sind.

Beispiele für geeignete stickstoffhaltige Härter umfassen Amine, insbesondere aliphatische Polyamine, arylaliphatische Polyamine, cycloaliphatische Polyamine, aromatische Polyamine und heterocyclische Polyamine, sowie Imidazole, Cyanamide, Polyharnstoffe, Mannich Basen, Polyetherpolyamine, Polyaminoamide, Phenalkamine, Sulfonamide, Aminocarbonsäuren oder Kombinationen der genannten Verbindungklassen. Ebenso können Reaktionsprodukte aus Epoxiden und/oder Anhydriden und den voranstehend genannten stickstoffhaltigen Verbindungen als Härter (D1) eingesetzt werden.

Beispiele für als Härter (D1) geeignete Alkohole sind vor allem phenolische Novolake oder Resole, allgemein Kondensationsprodukte von Aldehyden (bevorzugt Formaldehyd und Acetaldehyd) mit Phenolen, Kresolnovolake und Biphenyldiole.

Beispiele für als Härter (D1) geeignete Thiole umfassen bevorzugt mindestens difunktionelle Thiole wie Trimethylolpropan-tris(thioglycolat), Pentaerythritoltetrakis(thioglycolat), Ethylenglycol-dithioglycolat, Trimethylolpropan-tris(β-thiopropionat), Pentaerythritol-tetrakis(β-thiopropionat) und Dipentaerythritol-poly(β-thiopropionat).

Beispiele für als Epoxidhärter geeignete Anhydride umfassen Phthalsäureanhydrid (PSA), Bernsteinsäureanhydrid, Octenylbernsteinsäureanhydrid (OSA), Pentadodecenylbernsteinsäureanhydrid und andere Alkenylbernsteinsäureanhydride, Maleinsäureanhydrid (MA), Itaconsäureanhydrid (ISA), Tetrahydrophthalsäureanhydrid (THPA), Hexahydrophthalsäureanhydrid (HHPA), Methyltetrahydrophthalsäureanhydrid (MTHPA), Methylhexahydrophthalsäureanhydrid (MHHPA), Nadinsäureanhydrid, 3,6-Endomethylentetrahydrophthalsäureanhydrid, Methyl-endomethylentetrahydrophthalsäureanhydrid (METH, NMA), Tetrabromphthalsäureanhydrid und Trimellitsäureanhydrid.

Die Härterkomponente (D1) liegt in der härtbaren Masse bevorzugt in einem Anteil von 1-99 Gew.-% vor, weiter bevorzugt in einem Anteil von 10-70 Gew.-% und besonders bevorzugt von 20-50 Gew.-%, jeweils bezogen auf das Gesamtgewicht der Masse.

### Komponente (D2): Photolatente Säurebildner

In der ersten bevorzugten Ausführungsform des beschriebenen Verfahrens kommen dualhärtende Epoxidmassen zum Einsatz, die mindestens einen photolatenten Säurebildner (D2) enthalten. Der Säurebildner umfasst bevorzugt Verbindungen, die in der Lage sind, durch Einwirkung von aktinischer Strahlung eine starke Säure freizusetzen. Die freigesetzte Säure katalysiert die kationische Polymerisation der Masse. Durch Bestrahlen mit aktinischer Strahlung aktivierbare Säurebildner werden im Folgenden auch als photolatente Säure bezeichnet.

Geeignete photolatente Säuren sind unter anderem aromatische Arylsulfoniumsalze, wie sie in WO 2003/072567 A oder WO 2003/008404 A beschrieben sind, oder die in WO 1998/002493 A oder US 6,306,555 beschriebenen Aryliodoniumsalze.

Als photolatente Säuren geeignete Oniumsalze werden darüber hinaus von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 beschrieben.

Als Anionen der Sulfonium- oder lodoniumsalze seien beispielhaft HSO₄⁻, PF₆⁻, SbF₆⁻, AsF₆⁻, Cl⁻, Br⁻, I⁻, ClO₄⁻, PO₄⁻, SO₃CF₃⁻, Tosylat, Aluminate oder ein Borat-Anion wie etwa BF₄⁻ und B(C₆F₅)₄⁻ angeführt.

Kommerziell als photolatente Säuren verfügbare Photoinitiatoren auf Triarylsulfoniumbasis sind unter den Markennamen Chivacure 1176 von Chitec, als Irgacure PAG 290 von BASF SE oder als UVI-6976 und UVI-6974 von Dow Chemical Co. erhältlich.

Kommerziell als photolatente Säuren verfügbare Photoinitiatoren auf Diaryliodoniumbasis sind unter den Bezeichnungen UV1240 oder UV2257 von Deuteron und Bluesil 2074 von Rhodia erhältlich.

Neben photolatenten Säuren auf Basis von lodonium- und Sulfoniumionen sind auch nicht-ionische photolatente Säuren in den erfindungsgemäßen Massen verwendbar. Derartige Verbindungen auf Basis von Oximestern und Oximsulfonsäureestern werden in WO 2013/083505 A und in EP 1 124 832 A beschrieben. Kommerziell verfügbare nicht-ionische photolatente Säuren auf Basis von Oximsulfonsäureestern sind unter anderem unter den Bezeichnungen Irgacure PAG 103, Irgacure PAG 121 und Irgacure PAG 203, CGI 1907 von BASF SE erhältlich.

Ferner können als Komponente (D2) auch Triazinverbindungen oder Benzoinester als nicht-ionische photolatente Säuren genutzt werden.

Die in den erfindungsgemäßen Massen als Säurebildner eingesetzte photolatente Säure ist vorzugsweise durch aktinische Strahlung einer Wellenlänge von 200 bis 480 nm aktivierbar, besonders bevorzugt bei einer Wellenlänge von 320 bis 480 nm. Bei Bedarf kann die photolatente Säure mit einem geeigneten Sensibilisierungsmittel kombiniert werden.

Die voranstehenden Aufzählungen sind als beispielhaft für den photolatenten Säurebildner (D2) zu sehen und keineswegs als limitierend zu verstehen.

In den härtbaren Massen, insbesondere den kationisch härtbaren Massen zur Verwendung in der ersten bevorzugten Ausführungsform des erfindungsgemäßen Verfahrens, liegt der photolatente Säurebildner (D2) bevorzugt in einem Anteil von 0,01 bis 5 Gew.-% vor, weiter bevorzugt in einem Anteil von 0,05 - 3 Gew.-% und besonders bevorzugt in einem Anteil von 0,1 bis 1,5 Gew.-%, jeweils bezogen auf das Gesamtgewicht der härtbaren Masse.

Es ist weiterhin möglich, mehr als einen Säurebildner in den erfindungsgemäßen Massen zu verwenden. Besonders bevorzugt ist die Kombination einer photolatenten Säure und eines wärmelatenten Säurebildners, um dualhärtende Massen bereitzustellen, die neben der Aktivierung durch aktinische Strahlung zusätzlich mit einer Möglichkeit zur thermischen Aktivierung ausgestattet sind.

### Komponente (D3): Radikalbildner

Als Radikalbildner (D3) für die Polymerisation können beispielsweise radikalische Photoinitiatoren, aber auch im Handel übliche Peroxide, Persulfate und/oder Diazoverbindungen als thermische Radikalbildner eingesetzt werden. Beispiele für radikalische Photoinitiatoren sind α-Hydroxyketone, Benzophenon, α,α'-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Mehtyl-o-benzoylbenzoat, Benzoin, Benzoinethylether, Benzoinisopropylether, Benzoinisobutylehter, 2-Hydroxy-2-methyl-1-phenylpropan-1-on, 2-Isopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L. Ferner sind die DAROCUR^{™}-Typen von BASF SE verwendbar, so beispielsweise die Typen DAROCUR MBF, DAROCUR 1173, DAROCUR TPO und DAROCUR 4265.

Der in den erfindungsgemäßen Massen eingesetzte radikalische Photoinitiator ist vorzugsweise durch aktinische Strahlung einer Wellenlänge von 200 bis 500 nm aktivierbar, besonders bevorzugt von 320 bis 480 nm. Bei Bedarf kann der radikalische Photoinitiator mit einem geeigneten Sensibilisierungsmittel kombiniert werden.

Beispiele für als thermisch aktivierbare Radikalbildner geeignete Peroxide umfassen, Diacylperoxide, Peroxyester, Peroxydicarbonate, Hydroperoxide, Dialkylperoxide und/oder Peroxyketale.

Der Anteil des Radikalbildners (D3) in den härtbaren Massen liegt bevorzugt in einem Bereich von 0.01-5 Gew.-%, bevorzugt von weniger als 2 Gew.-%, besonders bevorzugt weniger als 1 Gew.-%, jeweils bezogen auf das Gesamtgewicht der härtbaren Masse.

Zur Durchführung der erfindungsgemäßen Verfahren werden härtbare Massen bevorzugt, die zusätzlich zu dem wärmelatenten Säurebildner als Komponente (B) einen Härter aufweisen, der aus einer oder mehreren der Komponenten D2 und/oder D3 besteht.

### Komponente (E): Additive

Die härtbaren Massen können außer den vorgenannten Komponenten noch fakultative Bestandteile als Additive (E) enthalten. Die Additive (E) sind vorzugsweise aus der Gruppe der Füllstoffe, Reaktivverdünner und inerten Verdünnungsmitteln, Farbstoffe, Pigmente, Alterungsschutzmittel, Fluoreszenzmittel, Stabilisatoren, Beschleuniger, Sensibilisatoren, Haftvermittler, Trockenmittel, Vernetzer, Fließverbesserer, Benetzungsmittel, Thixotropierungsmittel, Flexibilisierer, polymeren Verdickungsmittel, Flammschutzmittel, Korrosionsinhibitoren, Weichmacher und Tackyfier ausgewählt.

Die vorangegangene Aufzählung an Additiven ist als beispielhaft und keineswegs limitierend zu verstehen.

### Formulierung der Massen für das erfindungsgemäße Verfahren:

Die Massen werden bevorzugt einkomponentig formuliert. Kationisch polymerisierbare Massen werden bevorzugt ohne tertiäre Amine als Beschleuniger oder Polymerisationsverzögerer formuliert.

Eine für die Durchführung der ersten bevorzugten Ausführungsform des erfindungsgemäßen Verfahrens geeignete Masse zur Herstellung einer opaken Verklebung, eines Vergusses oder Beschichtung unter Verwendung einer kationisch polymerisierbaren, epoxidhaltigen Harzkomponente umfasst bevorzugt die folgende Zusammensetzung:
(A) 0,05 bis 5 Gew.-% einer irreversiblen thermochromen Verbindung;
(B) 0,1 bis 1,5 Gew.-% eines wärmelatenten Säurebildners;
(C) 20 bis 80 Gew.-% einer mindestens difunktionellen epoxidhaltigen Komponente, umfassend mindestens eine cycloaliphatische Epoxidverbindung;
(D) 0,1 bis 1,5 Gew.-% eines photolatenten Säurebildners; und
(E) 1 bis 80 Gew.-% Additive.

Es hat sich gezeigt, dass ein zu hoher Anteil der irreversiblen thermochromen Komponente die Aushärtung der dualhärtenden, kationisch polymerisierbaren Massen in dem erfindungsgemäßen Verfahren verlangsamen kann. Deswegen enthalten die Massen höchstens 5 Gew.-% und weiter bevorzugt höchstens etwa 3 Gew.-% der thermochromen Komponente.

Als Komponente (E) kann der Einsatz weiterer Farbstoffe oder Farbstoffmischungen sinnvoll sein, um die Opazität in gewünschten Spektralbereichen weiter zu erhöhen. Bevorzugt werden Farbstoffe als Additive (E) jedoch so gewählt, dass die Aktivierung des Photoinitiators durch aktinische Strahlung nicht eingeschränkt wird.

Die Transmission der gehärteten Masse ist nach der Durchführung des erfindungsgemäßen Verfahrens in einer Schichtdicke von 200 µm bei einer Wellenlänge von 450 nm um mindestens 25 % geringer als die Transmission der Masse vor dem Wärmeeintrag bzw. der Belichtung, bevorzugt um mindestens 35 % geringer, und besonders bevorzugt um mindestens 45% geringer.

Die für die Durchführung der Verfahren gemäß den oben beschriebenen weiteren Ausführungsformen verwendeten Massen können in analoger Weise zusammengesetzt sein, wobei jeweils die für die härtbare Harzkomponente (C) geeignete Härterkomponente (D) in einer dem Fachmann bekannten Menge eingesetzt wird. Die oben angegebenen Anteile der thermochromen Komponente (A) und des wärmelatenten Säurebildners (B) sowie der Additive können auch für diese Massen beibehalten werden.

### Anwendung der härtbaren Massen und des erfindungsgemäßen Verfahrens

Die erste bevorzugte Ausführungsform des erfindungsgemäßen Verfahrens lässt sich auf die im Stand der Technik beschriebene Anwendung der Fertigung von Kameramodulen anwenden. Durch die Auswahl eines thermochromen Farbstoffes, der eine niedrige Farbumschlagstemperatur nahe der Aushärtetemperatur aufweist, bei der die kationische Polymerisation durchgeführt wird, lässt sich ein hoher Wärmeeintrag in empfindliche optische Bauteile vermeiden. Gleichzeitig lässt sich eine optisch opake Verklebung herstellen, die dem Sensor Schutz vor Streulicht bietet. Dabei ist ein Transmissionsgrad für Schichtdicken zwischen 300 und 500 µm und sichtbares Licht von kleiner 20 % für eine Kameraanwendung bevorzugt. Noch weiter bevorzugt ist ein Transmissiongrad von kleiner 10 %, um den Eintrag von Streulicht zu reduzieren.

Für diese Ausführungsform liegt die erste Temperatur, bei der das Aufbringen und die Fixierung der Masse durch strahlungsinduzierte Polymerisation erfolgt, bevorzugt bei Umgebungstemperatur (10 bis 30 °C). Die zweite Temperatur, bei der die Aktivierung der thermochromen Komponente und die Warmhärtung erfolgt, beträgt im Allgemeinen bevorzugt 60 bis 120 °C. Für die beschriebene Fertigung von Kameramodulen liegt die zweite Temperatur besonders bevorzugt unter 100 °C.

Das erfindungsgemäße Verfahren bietet gegenüber dem Einsatz von beispielsweise mit Ruß permanent eingefärbten, härtbaren Massen den Vorteil, dass im Lichtfixierschritt durch die hohe Transzluzenz höhere Bestrahlungstiefen und damit auch höhere Festigkeiten erreicht werden können. Durch die Verwendung von optisch gut durchstrahlbaren Massen lassen sich ferner die Belichtungszeit und damit auch die Fertigungstaktzeiten verkürzen. Die geforderte Opazität wird erst durch einen nachgeschalteten Warmhärteschritt erzeugt. Das erfindungsgemäße Verfahren erlaubt dadurch gegenüber dem Stand der Technik stabilere und gleichzeitig beschleunigte Fertigungsprozesse.

Ein weiterer möglicher Einsatz des erfindungsgemäßen Verfahrens folgt der im Stand der Technik beschriebenen Fertigung von Chipmodulen. In Smartcard-Anwendungen erfolgt eine Verkapselung des Chips mit einer härtbaren Masse zum Schutz vor Umwelteinflüssen. In derartigen Verfahren bestehen hohe Ansprüche an die Prozessgeschwindigkeit und die Opazität der Verkapselung.

Ein weiterer Vorteil der erfindungsgemäßen Verfahren kann darin gesehen werden, dass durch den Farbumschlag der irreversiblen thermochromen Komponente auch das Erreichen der geforderten Aushärtetemperatur angezeigt wird. Allerdings können aus dem Farbumschlag keine Rückschlüsse auf das Maß des Aushärtefortschritts gezogen werden, da die Kinetik der jeweiligen Polymerisationsreaktion nicht zwangsläufig mit dem Farbumschlag korreliert.

### Definitionen und Testverfahren

### Bestrahlung

In den folgenden Ausführungsbeispielen wird, wenn nicht anders angegeben, unter Bestrahlung oder Belichtung die Bestrahlung mit einer LED-Lampe DELOLUX 80 / 400 (nominelle Wellenlänge 405 nm) der Firma DELO Industrie Klebstoffe mit einer Intensität von 200 ± 20 mW/cm² verstanden.

### Raumtemperatur

Raumtemperatur (RT) ist definiert als 23 °C ± 2 °C.

### DSC-Messungen

DSC-Messungen der Reaktivität erfolgen in einem dynamischen Differenzkalorimeter (DSC) vom Typ DSC 822e oder DSC 823e der Firma Mettler Toledo. Die Prüfung erfolgt analog zu DIN EN ISO 11357-1 und DIN EN ISO 11357-5. Die Bestrahlung erfolgte analog den oben angegebenen Parametern.

### UV-VIS Transmission

Die Transmission der Massen wurde mit einem UV-VIS Spektrometer des Typs SPECORD 50 PLUS, erhältlich von der Firma Analytik Jena, bestimmt. Dazu wurde die Masse jeweils zwischen zwei Glasobjektträgern (50 mm x 50 mm x 1,1 mm) aufgebracht. Ein Abstand von 200 µm wurde über Distanzdrähte eingestellt. Nach einer Referenzmessung gegen Luft erfolgte die Messung der flüssigen Probe zwischen den Glasobjektivträgern bei senkrechtem Strahlungseinfall. Die Transmission bei 450 nm wurde ausgewertet. Die Transmission der gehärteten Massen wurde analog bestimmt, nachdem diese wie angegeben gehärtet und einem Ofenprozess für 30 min bei 130 °C unterzogen wurden.

Die Änderung der Transmission in den nachfolgenden Tabellen wird als prozentuale Abnahme der Transmission der jeweiligen Ausgangsmasse nach Durchführung des erfindungsgemäßen Verfahrens angegeben.

### Bestimmung der härtbaren Schichtdicke

Eine Aluminium-Ringform mit einem Durchmesser von 21 mm und einer Höhe von 1,5 cm wird mit der härtbaren Masse vollständig gefüllt und entsprechend den oben angegebenen Bestrahlungsparametern 10 sec lang bestrahlt. Nach Einhalten einer Wartezeit von 72 h bei Raumtemperatur wird die ausgehärtete Masse aus der Form entformt, nicht ausgehärtete Masse entfernt und die Schichtdicke der gehärteten Masse mit einem Messschieber bestimmt. Bei den durch Licht und Feuchte härtbaren Massen der zweiten Ausführungsform wurde auf das Einhalten der 72-stündigen Wartezeit verzichtet.

### Herstellung der härtbaren Massen

Zur Herstellung der in den folgenden Beispielen verwendeten härtbaren Massen werden zunächst die flüssigen Bestandteile gemischt und anschließend die Füllstoffe und wahlweise weitere Feststoffe mithilfe eines Laborrührwerks, Labordissolvers oder eines Speedmixers (Fa. Hauschild) eingearbeitet, bis eine homogene Masse entsteht. Massen, die Photoinitiatoren enthalten und die sensitiv gegenüber sichtbaren Licht sind, müssen entsprechend unter Licht außerhalb der Anregungswellenlänge der Photoinitiatoren oder Sensibilisatoren hergestellt werden.

In den nachfolgenden Tabellen ist die Zusammensetzung der härtbaren Massen unter Verwendung der folgenden Abkürzungen angegeben.
Komponente (A): Thermochrome Komponente

| | |
|---|---|
| A1: | Kromagen Black K60-NH (irreversible thermochrome Komponente; erhältlich von Hallcrest) |

Komponente (B): Wärmelatenter Säurebildner

| | |
|---|---|
| B1: | K-Pure CXC-1733 (quartäres Benzylammoniumsalz mit Hexafluoroantimonatanion; erhältlich von King Industries Inc.) |

Komponente (C): Härtbare Harze
Komponente (C1): Epoxidhaltige Komponente

| | |
|---|---|
| C11: | Celloxide 2021P ((3',4'-Epoxycyclohexane)methyl 3,4-epoxycyclohexylcarboxylate, erhältlich von Daicel Corporation) |
| C12: | jER YL 980 (Bisphenol-A-Diglycidylether; erhältlich von Mitsubishi Chemical Corporation) |

Komponente (C2): (meth)acrylathaltige Verbindung:

| | |
|---|---|
| C21: | CN 9002 (difunktionelles aliphatisches Urethanacrylat; erhältlich von Sartomer, Arkema Group) |

Komponente (C3): Silanhaltige Verbindung

| | |
|---|---|
| C31: | SAX015 (Silan-modifiziertes Präpolymer auf Polyetherbasis; erhältlich von Kaneka Jp.) |

Komponente (D): Härter

| | |
|---|---|
| D21: | Irgacure^{®} 290 (Sulfonium-tetrakis[pentafluorophenyl]borat, erhätlich von BASF SE) |
| D22: | Deuteron UV 1240 (Bis(dodecylphenyl)iodonium-hexafluoroantimonat 50 Gew.-% in Propylencarbonat; erhältlich von Fa. Deuteron) |

Komponente (D3): Radikalbildner

| | |
|---|---|
| D31: | TPO-L (Ethyl (2,4,6-trimethylbenzoyl)phenylphosphinat; erhältlich von Lambson Ltd.) |

Komponenten (E): Additive

| | |
|---|---|
| E1: | Sensibilisator Anthracure UVS-1331 (9,10-Dibutoxyanthracen, erhältlich von Kawasaki Kasei Chemicals Ltd.) |
| E2: | Sensibilisator Speedcure 2-ITX (2-Isopropylthioxanthon, erhältlich von Lambson Ltd.) |
| E3: | Spezialschwarz 100 (Ruß; erhältlich von Fa. Degussa) |
| E4: | Denka Fused Silica FB-5SDX (Silica-Füllstoff, erhältlich von Denka Company Ltd.) |
| E5: | OXT 221 (Bis[1-Ethyl(3-oxetanyl)]methylether; erhältlich von Toagosei Co., Ltd.) |

### Beispiel 1 und Vergleichsbeispiel 1

Die härtbare Masse gemäß Beispiel 1 in der nachfolgenden Tabelle 1 ist eine dualhärtende, durch Einwirkung von aktinischer Strahlung und Wärme kationisch härtbare Masse, die in der ersten Ausführungsform des erfindungsgemäßen Verfahrens verwendet werden kann. Vergleichsbeispiel 1 zeigt eine kationisch härtbare Masse, jedoch ohne thermochrome Komponente. In den Massen gemäß Beispiel 1 und Vergleichsbeispiel 1 wird jeweils ein wärmelatenter Säurebildner verwendet.

**Tabelle 1: Härtbare Masse gemäß der ersten Ausführungsform**

| **Komponente** | Beispiel 1 | Vergleichsbeispiel 1 |
|---|---|---|
| **(A)** | 0,2 Gew.- % **A1** | - |
| **(B)** | 0,5 Gew.-% **B1**(in 0,5 Gew.-% Propylen- carbonat) | 0,5 Gew.-% **B1(in** 0,5 Gew.-% Propylen-carbonat) |
| **(C)** | 31,2 Gew.-% **C11** | 31,3 Gew.-% **C11** |
| | 17 Gew.-% **C12** | 17 Gew.-% **C12** |
| **(D)** | 0,5 Gew.-% **D21** | 0,5 Gew.-% **D21** |
| **(E)** | 0,1 Gew.-% **E1** | 0,1 Gew.-% **E1** |
| | 50 Gew.-% **E4** | 50 Gew.-% **E4** |
| | | 0,1 Gew.-% **E3** |

| **Aushärtungsparameter** | Bestrahlung: 400 nm, 200 mW/cm², 10s; | |
|---|---|---|
| | Ofen: 30 min @ 130 °C (+72 h Wartezeit) | |
| Prozentuale Abnahme der Transmission | 29 % | 0 % |
| Härtbare Schichtdicke (bei 400 nm, 200 mW/cm², 10s +72h Wartezeit) | 575 µm | 214 µm |
| Optischer Eindruck | schwarz | schwarz |

Zur Durchführung des erfindungsgemäßen Verfahrens wird die Masse bei Umgebungstemperatur (20-30 °C) bestrahlt und dann im Ofen auf mindestens die zweite Temperatur erwärmt, um den Farbumschlag der thermochromen Komponente und die Aushärtung der Masse zu bewirken.

Die härtbare Masse von Beispiel 1 zeichnet sich durch eine hohe Transmission im flüssigen Zustand aus. Nach Durchführen des erfindungsgemäßen Verfahrens sinkt die Transmission in einer Schichtdicke von 200 µm um 29 % gegenüber ihrem Ursprungswert im nicht gehärteten Zustand.

Vergleichsbeispiel 1 zeigt demgegenüber eine Masse, die zum Erreichen einer hohen Opazität mit Ruß versetzt wurde. Die Transmission der Vergleichsmasse 1 ist sowohl vor als auch nach der Durchführung der Schritte des erfindungsgemäßen Verfahrens niedrig. Gleichzeitig beträgt die härtbare Schichtdicke der Masse von Vergleichsbeispiel 1 nur 214 µm und ist damit um über 50 % niedriger als die härtbare Schichtdicke der erfindungsgemäßen Masse von Beispiel 1, die unter Verwendung der gleichen Härtungsparameter 514 µm beträgt.

In einer ergänzenden Untersuchung wurde festgestellt, dass mit einer Masse gemäß Beispiel 1 jedoch ohne den wärmelatenten Säurebildner kein Farbumschlag der thermochromen Komponente erreicht werden kann, selbst wenn die Masse nach dem Belichten über den Farbumschlagspunkt der Komponente hinaus erwärmt wird. Die Anwesenheit der aus dem photolatenten Säurebildner freigesetzten Säure alleine reicht für die Bereitstellung einer opaken Masse durch Erwärmen auf die zweite Temperatur nicht aus.

Das erfindungsgemäße Verfahren zeichnet sich somit dadurch aus, dass niedrige Transmissionen in den ausgehärteten Massen bei gleichzeitig hohen härtbaren Schichtdicken erreichbar sind.

### Beispiel 2 und Vergleichsbeispiele 2a und 2b

Die härtbare Masse gemäß Beispiel 2 in der nachfolgenden Tabelle 2 ist eine dualhärtende, durch Einwirkung von aktinischer Strahlung und Feuchte härtbare Masse, die in der zweiten Ausführungsform des erfindungsgemäßen Verfahrens verwendet werden kann. Die Vergleichsbeispiele 2a und 2b zeigen eine dualhärtende Masse, jedoch ohne wärmelatenten Säurebildner (Vergleichsbeispiel 2a) und ohne wärmelatenten Säurebildner und thermochrome Komponente (Vergleichsbeispiel 2b). In den Massen gemäß Beispiel 2 und Vergleichsbeispiel 2a wird jeweils eine irreversible thermochrome Komponente verwendet.

**Tabelle 2: Härtbare Masse gemäß der zweiten Ausführungsform**

| **Komponente** | Beispiel 2 | Vergleichsbeispiel 2a | Vergleichsbeispiel 2b |
|---|---|---|---|
| **(A)** | 2 Gew. % **A1** | 2 Gew. % **A1** | - |
| **(B)** | 0,5 Gew.-% **B1** (in 0,5 Gew.-% Propylencarbonat) | - | - |
| **(C)** | 46,5 Gew.-% **C21** | 47,5 Gew.-% **C21** | 49,48 Gew.-% **C21** |
| | 50 Gew. -% **C31** | 50 Gew. -% **C31** | 50 Gew. -% **C31** |
| **(D)** | 0,5 Gew.-% **D31** | 0,5 Gew.-% **D31** | 0,5 Gew.-% **D31** |
| **(E)** | - | - | 0,02 Gew.-% **E3** |

| **Aushärtungs- parameter** | Bestrahlung: 400 nm, 200 mW/cm², 10s; | | |
|---|---|---|---|
| | Ofen: 30 min @ 130 °C | | |
| Prozentuale Abnahme der Transmission | 59 % | - 3 % | - 3 % |
| Härtbare Schichtdicke (bei 400 nm, 200 mW/cm², 10s +72h Wartezeit) | 5,4 mm | 5,1 mm | 0,7 mm |
| Optischer Eindruck | schwarz | milchig | schwarz |

Zur Durchführung des erfindungsgemäßen Verfahrens wir die durch Belichten bei Umgebungstemperatur fixierte Masse zunächst auf mindestens die zweite Temperatur erwärmt, um den Farbumschlag der thermochromen Komponente zu erzielen, und anschließend zur vollständigen Aushärtung unter Umgebungsbedingungen bei 40 % relativer Luftfeuchtigkeit gelagert.

Die härtbare Masse gemäß Beispiel 2 weist nach der Belichtung eine sehr hohe härtbare Schichtdicke von über 5 mm auf. Die Transmission sinkt nach der Durchführung des erfindungsgemäßen Verfahrens um 59%. Ein Verzicht auf den wärmelatenten Säurebildner (Vergleichsbeispiel 2a) führt dazu, dass die thermochrome Komponente trotz Wärmeeintrag keinen Farbumschlag zeigt. Mit Ruß eingefärbte Vergleichsmassen (Vergleichsbeispiel 2b) zeichnen sich durch eine niedrige härtbare Schichtdicke nach Belichtung aus.

### Beispiel 3 und Vergleichsbeispiele 3a und 3b

Die härtbare Masse gemäß Beispiel 3 in der nachfolgenden Tabelle 3 ist eine Masse auf Basis von (Meth)Acrylatharzen, die rein lichthärtend ist, und die in der dritten Ausführungsform des erfindungsgemäßen Verfahrens verwendet werden kann. Die Vergleichsbeispiele 3a und 3b zeigen eine strahlungshärtende Masse, jedoch ohne wärmelatenten Säurebildner (Vergleichsbeispiel 3a) und ohne wärmelatenten Säurebildner und thermochrome Komponente (Vergleichsbeispiel 3b). In den Massen gemäß Beispiel 3 und Vergleichsbeispiel 3a wird jeweils eine irreversible thermochrome Komponente verwendet.

**Tabelle 3: Härtbare Masse gemäß der dritten Ausführungsform**

| **Komponente** | Beispiel 3 | Vergleichsbeispiel 3a | Vergleichsbeispiel 3b |
|---|---|---|---|
| **(A)** | 2 Gew. % **A1** | 2 Gew. % **A1** | - |
| **(B)** | 0,5 Gew.-% **B1** (in 0,5 Gew.-% Propylencarbonat) | - | - |
| **(C)** | 96,5 Gew.-% **C21** | 97,5 Gew.-% **C21** | 99,48 Gew.-% **C21** |
| **(D)** | 0,5 Gew.-% **D31** | 0,5 Gew.-% **D31** | 0,5 Gew.-% **D31** |
| **(E)** | - | - | 0,02 Gew.-% **E3** |

| **Aushärtungs- parameter** | Bestrahlung: 400 nm, 200 mW/cm², 10s; | | |
|---|---|---|---|
| | Ofen: 30 min @ 130 °C (+72 h Wartezeit) | | |
| Prozentuale Abnahme der Transmission | 68 % | 0 % | 3% |
| Härtbare Schichtdicke (bei 400 nm, 200 mW/cm², 10s +72h Wartezeit) | 4,5 mm | 4,1 mm | 2,2 mm |
| Optischer Eindruck | schwarz | milchig | schwarz |

Zur Durchführung des erfindungsgemäßen Verfahrens wird die Masse bei Umgebungstemperatur (20-30 °C) bestrahlt und ausgehärtet, und dann im Ofen auf mindestens die zweite Temperatur erwärmt, um den Farbumschlag der thermochromen Komponente zu bewirken.

Die härtbare Masse gemäß Beispiel 3 weist nach der Belichtung eine sehr hohe härtbare Schichtdicke von 4,5 mm auf. Die Transmission sinkt nach der Durchführung des erfindungsgemäßen Verfahrens um 68%. Ein Verzicht auf den wärmelatenten Säurebildner (Vergleichsbeispiel 3a) führt auch in diesem Fall dazu, dass die thermochrome Komponente trotz Wärmeeintrag keinen Farbumschlag zeigt. Mit Ruß eingefärbte Vergleichsmassen (Vergleichsbeispiel 3b) zeichnen sich durch eine niedrige härtbare Schichtdicke aus.

Die nachfolgende Tabelle 5 zeigt den Einfluss der Konzentration der thermochromen Komponente in Massen gemäß der ersten Ausführungsform des erfindungsgemäßen Verfahrens. Mit zunehmendem Anteil an Komponente (A) sinkt die Reaktivität der Massen, was an den höheren Peakzeiten und Peaktemperaturen in Photo-DSC Messungen erkennbar ist. Die Ergebnisse zeigen weiter, dass bei einem Anteil der thermochromen Komponente von größer 5 Gew.-% in den erfindungsgemäßen Massen nicht mehr mit einer vollständigen Aushärtung der Massen gerechnet werden kann und die Masse nach Belichten und Erwärmen in einem flüssigen Zustand verbleibt.

**Tabelle 5: Variation des Anteils der thermochromen Verbindung**

| **Komponente** | Beispiel 5 | Beispiel 6 | Beispiel 7 | Beispiel 8 |
|---|---|---|---|---|
| **(A)** | 0,2 Gew.-% **A1** | 1,0 Gew.- % **A1** | 2,0 Gew.- % **A1** | 5,0 Gew.- % **A1** |
| **(B)** | 0,5 Gew.-% **B1** (in 0,5 Gew.-% Propylencarbonat) | 0,5 Gew.-% **B1** (in 0,5 Gew.-% Propylencarbonat) | 0,5 Gew.-% **B1** (in 0,5 Gew.-% Propylencarbonat) | 0,5 Gew.-% **B1** (in 0,5 Gew.-% Propylencarbonat) |
| **(C)** | 32,3 Gew.-% **C11** | 32,3 Gew.-% **C11** | 32,3 Gew.-% **C11** | 32,3 Gew.-% **C11** |
| | 32,7 Gew.-% **C12** | 31,9 Gew.-% **C12** | 30,9 Gew.-% **C12** | 27,9 Gew.-% **C12** |
| **(D)** | 1 Gew.-% **D21** | 1 Gew.-% **D21** | 1 Gew.-% **D21** | 1 Gew.-% **D21** |
| **(E)** | 32,8 Gew.-% **E5** | 32,8 Gew.-% **E5** | 32,8 Gew.-% **E5** | 32,8 Gew.-% **E5** |
| Aushärtung | 400nm, 200mw/cm², 5 s + Ofen 30 min @ 130°C | | | |
| Peakzeit [s] | 3,0 | 4,9 | 6,7 | - |
| Peak-temperatur [°C] | 97 | 108 | 116 | - |
| Habitus | Fest, ausgehärtet, schwarz | Fest, ausgehärtet, schwarz | Fest, ausgehärtet, schwarz, | Flüssig, nicht ausgehärtet, schwarz |

## Patentansprüche

1. Verfahren zur Herstellung eines opaken Vergusses, einer Verklebung oder Beschichtung unter Verwendung einer härtbaren Masse, die bei einer ersten Temperatur durchstrahlbar ist, wobei die Masse einen UV-VIS-Transmissionsgrad in einem Spektralbereich von 380 bis 1100 nm und bei einer Schichtdicke von 200 µm aufweist, der mindestens 75 % beträgt, und die Masse mindestens eine irreversible thermochrome Komponente enthält, wobei das Verfahren die folgenden Schritte umfasst:
(a) Dosieren der härtbaren Masse auf ein erstes Substrat;
(b) wahlweise Zuführen eines zweiten Substrates zur härtbaren Masse;
(c) Belichten der Masse mit aktinischer Strahlung sowie wahlweise Einwirken von Wärme und/oder Feuchte, um in der Masse eine Polymerisation oder Vernetzung zu initiieren,
(d) Erwärmen der Masse auf mindestens eine zweite Temperatur, wobei die zweite Temperatur höher ist als die erste Temperatur und wobei die Masse bei Erreichen der zweiten Temperatur durch einen Farbumschlag der thermochromen Komponente in einen opaken Zustand übergeht, in welchem der UV-VIS-Transmissionsgrad der Masse bei 450 nm und einer Schichtdicke von 200 µm um mindestens 25 % geringer ist als vor dem Belichten der Masse.

2. Verfahren nach Anspruch 1, **dadurch gekennzeichnet, dass** die härtbare Masse einen wärmelatenten Säurebildner enthält, bevorzugt in einem Anteil von 0,01 bis 5 Gew.-%, bezogen auf das Gesamtgewicht der härtbaren Masse.

3. Verfahren nach einem der Ansprüche 1 oder 2, **dadurch gekennzeichnet, dass** die härtbare Masse eine kationisch durch Einwirkung von aktinischer Strahlung und Wärme härtbare Masse ist und einen wärmelatenten Säurebildner sowie eine photolatente Säure enthält.

4. Verfahren nach einem der Ansprüche 1 oder 2, **dadurch gekennzeichnet, dass** die härtbare Masse eine durch Einwirkung von aktinischer Strahlung und Wärme härtbare Masse ist, wobei die Masse einen wärmelatenten Säurebildner und einen radikalischen Photoinitiator in Kombination mit einem thermisch aktivierbaren Radikalbildner enthält.

5. Verfahren nach Anspruch 3 oder 4, welches die folgenden Schritte umfasst:
(a) Dosieren der härtbaren Masse auf ein erstes Substrat;
(b) Wahlweise Zuführen eines zweiten Substrats zu der Masse;
(c) Belichten der Masse mit aktinischer Strahlung einer geeigneten Wellenlänge bei der ersten Temperatur, um die photolatente Säure oder den radikalischen Photoinitiator zu aktivieren und eine erste Polymerisationsreaktion zu initiieren;
(d) Erwärmen der belichteten Masse auf mindestens die zweite Temperatur, die ausreichendend ist, um den wärmelatenten Säurebildner sowie wahlweise den thermischen Radikalbildner zu aktivieren und den Farbumschlag der thermochromen Komponente hervorzurufen, und Aushärten der Masse.

6. Verfahren nach einem der Ansprüche 1 oder 2, **dadurch gekennzeichnet, dass** die härtbare Masse eine durch Licht und Feuchtigkeit härtbare Masse ist, wobei die Masse einen wärmelatenten Säurebildner enthält.

7. Verfahren nach Anspruch 6, welches die folgenden Schritte umfasst:
(a) Dosieren der härtbaren Masse auf ein erstes Substrat;
(b) wahlweise Zuführen eines zweiten Substrats zu der Masse;
(c) Belichten der Masse mit aktinischer Strahlung einer geeigneten Wellenlänge bei der ersten Temperatur, um eine erste Polymerisationsreaktion zu initiieren;
(d) Erwärmen der belichteten und wahlweise ausgehärteten Masse auf die zweite Temperatur, die ausreichend ist, um den wärmelatenten Säurebildner zu aktivieren und einen Farbumschlag der thermochromen Komponente hervorzurufen; und
(e) Einhalten einer ausreichenden Wartezeit bis zur vollständigen Feuchtehärtung der Masse vor oder nach Schritt d).

8. Verfahren nach einem der Ansprüche 1 oder 2, **dadurch gekennzeichnet, dass** die härtbare Masse eine ausschließlich durch Belichten mit aktinischer Strahlung härtbare Masse ist, wobei die Masse einen wärmelatenten Säurebildner und einen radikalischen Photoinitiator enthält.

9. Verfahren nach Anspruch 8, welches die folgenden Schritte umfasst:
(a) Dosieren der härtbaren Masse auf ein erstes Substrat;
(b) wahlweise Zuführen eines zweiten Substrats zu der Masse;
(c) Belichten der Masse mit aktinischer Strahlung einer geeigneten Wellenlänge bei der ersten Temperatur, um die Masse zu härten; und
(d) Erwärmen der gehärteten Masse auf mindestens die zweite Temperatur, die ausreichend ist, um den wärmelatenten Säurebildner zu aktivieren und einen Farbumschlag der thermochromen Komponente hervorzurufen.

10. Härtbare Masse zur Durchführung des Verfahrens gemäß einem der Ansprüche 1 bis 9 wobei die härtbare Masse eine Einkomponentenmasse ist und ein härtbares Harz sowie mindestens eine irreversible thermochrome Komponente und einen wärmelatenten Säurebildner umfasst.

11. Härtbare Masse nach Anspruch 10, **dadurch gekennzeichnet, dass** die Masse durch Einwirkung von aktinischer Strahlung und Wärme, oder durch Einwirkung von aktinischer Strahlung und Feuchte härtbar ist.

12. Härtbare Masse nach Anspruch 10 oder 11 **dadurch gekennzeichnet, dass** die härtbare Masse als Additiv wenigstens einen weiteren Farbstoff enthält.

13. Verwendung der härtbaren Masse nach einem der vorhergehenden Ansprüche 10 bis 12 zum Verkleben, Vergießen oder Beschichten von Substraten, insbesondere von optoelektronischen Bauteilen.

14. Verwendung nach Anspruch 13 **dadurch gekennzeichnet, dass** das Substrat ein Chipmodul ist, bevorzugt das Chipmodul einer Smartcard, wobei das Substrat bevorzugt in einem Verfahren nach den Ansprüchen 5 verklebt oder vergossen wird.

## Claims

1. A method of producing an opaque encapsulation, adhesive bonding or coating using a curable composition through which radiation can pass at a first temperature, the composition having a UV-VIS transmittance in a spectral range of from 380 to 1100 nm and at a layer thickness of 200 µm that is at least 75%, and the composition containing at least one irreversible thermochromic component, the method comprising the following steps:
(a) dosing the curable composition onto a first substrate;
(b) optionally supplying a second substrate to the curable composition;
(c) exposing the composition to actinic radiation and optionally exposing it to heat and/or moisture to initiate polymerization or cross-linking in the composition,
(d) heating the composition to at least a second temperature, wherein the second temperature is higher than the first temperature and wherein, upon reaching the second temperature, the composition changes to an opaque state by a color change of the thermochromic component, in which the UV-VIS transmittance of the composition at 450 nm and a layer thickness of 200 µm is at least 25% lower than prior to exposure of the composition.

2. The method according to claim 1, **characterized in that** the curable composition contains a thermally latent acid generator, preferably in a proportion of from 0.01 to 5% by weight, based on the total weight of the curable composition.

3. The method according to either of claims 1 or 2, **characterized in that** the curable composition is a composition that is cationically curable by exposure to actinic radiation and heat and contains a thermally latent acid generator and a photolatent acid.

4. The method according to either of claims 1 or 2, **characterized in that** the curable composition is a composition that is curable by exposure to actinic radiation and heat, the composition containing a thermally latent acid generator and a radical photoinitiator in combination with a thermally activatable radical generator.

5. The method according to claim 3 or 4, comprising the following steps:
(a) dosing the curable composition onto a first substrate;
(b) optionally supplying a second substrate to the composition;
(c) exposing the composition to actinic radiation of a suitable wavelength at the first temperature to activate the photolatent acid or the radical photoinitiator and to initiate a first polymerization reaction;
(d) heating the exposed composition to at least the second temperature that is sufficient to activate the thermally latent acid generator and optionally the thermal radical generator and to bring about the color change of the thermochromic component, and curing the composition.

6. The method according to either of claims 1 or 2, **characterized in that** the curable composition is a composition that is curable by light and moisture, the composition containing a thermally latent acid generator.

7. The method according to claim 6, comprising the following steps:
(a) dosing the curable composition onto a first substrate;
(b) optionally supplying a second substrate to the composition;
(c) exposing the composition to actinic radiation of a suitable wavelength at the first temperature to initiate a first polymerization reaction;
(d) heating the exposed and optionally cured composition to the second temperature that is sufficient to activate the thermally latent acid generator and to bring about a color change of the thermochromic component; and
(e) observing a sufficient waiting time until complete moisture curing of the composition before or after step (d).

8. The method according to either of claims 1 or 2, **characterized in that** the curable composition is a composition that is curable exclusively by exposure to actinic radiation, the composition containing a thermally latent acid generator and a radical photoinitiator.

9. The method according to claim 8, comprising the following steps:
(a) dosing the curable composition onto a first substrate;
(b) optionally supplying a second substrate to the composition;
(c) exposing the composition to actinic radiation of a suitable wavelength at the first temperature to cure the composition; and
(d) heating the cured composition to at least the second temperature that is sufficient to activate the thermally latent acid generator and to bring about a color change of the thermochromic component.

10. A curable composition for carrying out the method according to any of claims 1 to 9, wherein the curable composition is a single-component composition and comprises a curable resin and at least one irreversible thermochromic component and a thermally latent acid generator.

11. The curable composition according to claim 10, **characterized in that** the composition is curable by exposure to actinic radiation and heat, or by exposure to actinic radiation and moisture.

12. The curable composition according to claim 10 or 11, **characterized in that** the curable composition contains at least one further dye as an additive.

13. Use of the curable composition according to any of the preceding claims 10 to 12 for adhesive bonding, encapsulating or coating of substrates, in particular of optoelectronic components.

14. Use according to claim 13, **characterized in that** the substrate is a chip module, preferably the chip module of a smart card, wherein the substrate is preferably bonded or encapsulated in a method according to claims 5.

## Revendications

1. Procédé de fabrication d'une encapsulation opaque, d'un collage ou d'un revêtement en utilisant une masse durcissable à travers laquelle un rayonnement peut passer à une première température, la masse présentant dans une région spectrale de 380 à 1100 nm et pour une épaisseur de couche de 200 µm un facteur de transmission UV-VIS d'au moins 75%, et la masse contenant au moins un composant thermochrome irréversible, le procédé comprenant les étapes suivantes :
(a) dosage de la masse durcissable sur un premier substrat ;
(b) facultativement amenée d'un deuxième substrat vers la masse durcissable ;
(c) exposition de la masse à un rayonnement actinique et facultativement exposition à la chaleur et/ou l'humidité pour initier une polymérisation ou une réticulation dans la masse ;
(d) chauffage de la masse à au moins une deuxième température, la deuxième température étant supérieure à la première température, et la masse, lorsque la deuxième température est atteinte, passant, par un changement de couleur du composant thermochrome, à l'état opaque, dans lequel le facteur de transmission UV-VIS de la masse à 450 nm et pour une épaisseur de couche de 200 µm est réduit d'au moins 25% par rapport à celui avant l'exposition de la masse.

2. Procédé selon la revendication 1, **caractérisé en ce que** la masse durcissable contient un acidificateur thermiquement latent, de préférence dans une proportion de 0,01 à 5% en poids par rapport au poids total de la masse durcissable.

3. Procédé selon l'une des revendications 1 ou 2, **caractérisé en ce que** la masse durcissable est une masse durcissable par voie cationique par effet de rayonnement actinique et de chaleur, et contient un acidificateur thermiquement latent et un acide photolatent.

4. Procédé selon l'une des revendications 1 ou 2, **caractérisé en ce que** la masse durcissable est une masse durcissable par effet de rayonnement actinique et de chaleur, la masse contenant un acidificateur thermiquement latent et photoinitiateur radicalaire en combinaison avec un agent de formation radicalaire thermiquement activable.

5. Procédé selon la revendication 3 ou 4, comprenant les étapes suivantes :
(a) dosage de la masse durcissable sur un premier substrat ;
(b) facultativement amenée d'un deuxième substrat vers la masse ;
(c) exposition de la masse à un rayonnement actinique à une longueur d'ondes appropriée à la première température pour activer l'acide photolatent ou le photoinitiateur radicalaire et initier une première réaction de polymérisation ;
(d) chauffage de la masse exposée au moins à la deuxième température qui est suffisante pour activer l'acidificateur thermiquement latent et facultativement l'agent de formation radicalaire thermique et provoquer le changement de couleur du composant thermochrome, et durcissement de la masse.

6. Procédé selon l'une des revendications 1 ou 2, **caractérisé en ce que** la masse durcissable est une masse durcissable par lumière et humidité, la masse contenant un acidificateur thermiquement latent.

7. Procédé selon la revendication 6, comprenant les étapes suivantes :
(a) dosage de la masse durcissable sur un premier substrat ;
(b) facultativement amenée d'un deuxième substrat vers la masse ;
(c) exposition de la masse à un rayonnement actinique à une longueur d'ondes appropriée à la première température pour initier une première réaction de polymérisation ;
(d) chauffage de la masse exposée et facultativement durcie à la deuxième température qui est suffisante pour activer l'acidificateur thermiquement latent et provoquer un changement de couleur du composant thermochrome ; et
(e) respect d'un temps d'attente suffisant jusqu'au durcissement par humidité complet de la masse avant ou après l'étape d).

8. Procédé selon l'une des revendications 1 ou 2, **caractérisé en ce que** la masse durcissable est une masse durcissable exclusivement par exposition à un rayonnement actinique, la masse contenant un acidificateur thermiquement latent et un photoinitiateur radicalaire.

9. Procédé selon la revendication 8, comprenant les étapes suivantes :
(a) dosage de la masse durcissable sur un premier substrat ;
(b) facultativement amenée d'un deuxième substrat vers la masse ;
(c) exposition de la masse à un rayonnement actinique à une longueur d'ondes appropriée à la première température pour durcir la masse ; et
(d) chauffage de la masse durcie au moins à la deuxième température qui est suffisante pour activer l'acidificateur thermiquement latent et provoquer un changement de couleur du composant thermochrome.

10. Masse durcissable pour la mise en oeuvre du procédé selon l'une des revendications 1 à 9, la masse durcissable étant une masse à un composant et comprenant une résine durcissable et au moins un composant thermochrome irréversible et un acidificateur thermiquement latent.

11. Masse durcissable selon la revendication 10, **caractérisée en ce que** la masse est durcissable par effet de rayonnement actinique et de chaleur, ou par effet de rayonnement actinique et d'humidité.

12. Masse durcissable selon la revendication 10 ou 11, **caractérisée en ce que** la masse durcissable contient au moins un colorant supplémentaire en tant qu'additif.

13. Utilisation de la masse durcissable selon l'une des revendications 10 à 12 pour le collage, l'encapsulation ou le revêtement de substrats, en particulier de composants optoélectroniques.

14. Utilisation selon la revendication 13, **caractérisée en ce que** le substrat est un module de puce, de préférence le module de puce d'une carte à puce, le substrat étant de préférence collé ou encapsulé selon un procédé selon les revendications 5.
